# EUROPEAN PATENT APPLICATION

(11) **EP 4 826 346 A1**
(43) Date of publication of application: **21.10.2026**
(21) Application number: 25741486.2
(22) Date of filing: 14.01.2025
(51) Int. Cl.: G01L 1/04

(54) **FORCE SENSOR, FORCE SENSING CATHETER, ABLATION DEVICE AND MEDICAL APPARATUS**

(30) Priority: 15.01.2024 CN 202410058363; 15.01.2024 CN 202420098134 U
(71) Applicant: Beijing Bywave Sensing Technology Co., LTD, Beijing 101115 (CN)
(72) Inventor: YAN, Yibin, Beijing 101115 (CN); ZHANG, Lizhe, Beijing 101115 (CN)
(74) Representative: Murgitroyd & Company
(86) International application number: PCT/CN2025/072276
(87) International publication number: WO 2025/152925

(57) **Abstract**

A force sensor, comprising a sensor body (100), the sensor body (100) comprising a first section (10), a second section (20), and a middle section (30) located between the first section (10) and the second section (20) and connecting the first section (10) and the second section (20). At least part of the outer surface of the middle section (30) is recessed inwardly with respect to the outer surface of the first section (10) and the outer surface of the second section (20), so as to form a gap (40) between the first section (10) and the second section (20). The sensor body (100) further comprises an annular portion, the annular portion defining at least part of an axial boundary of the gap (40), and the thickness of the annular portion being less than the width of an annular surface thereof. Also disclosed are a force sensing catheter, an ablation device, and a medical apparatus.

## Description

This application claims priority to Chinese Patent Application No. 202410058363.4 filed on January 15, 2024 and Chinese Patent Application No. 202420098134.0 filed on January 15, 2024. The entire contents of the above Chinese patent applications are incorporated herein by reference as part of this application.

### TECHNICAL FIELD

The present disclosure relates to the field of medical apparatus, and in particular to a force sensor particularly suitable for catheter-based diagnostic and therapeutic systems. The present disclosure also relates to a force-sensing catheter having the force sensor, and an ablation device.

### BACKGROUND

Atrial fibrillation is one of the most common clinical arrhythmias, its prevalence in the general population is 0.4% to 1%, and the incidence increases significantly with age. This disease can cause high disability and mortality rates. Catheter ablation can cure atrial fibrillation and improve patient symptoms, and the effectiveness of ablation is closely related to the degree of contact between the ablation catheter and atrial tissue. Permanent transmural lesions at all ablation points for atrial fibrillation are the key to ensuring a high success rate of surgery and reducing recurrence, and are also a difficulty in ablation. The development of new pressure-contact monitoring catheters focuses on improving tissue apposition, enhancing the safety of catheter operation, and better controlling the size of ablation lesions, thereby increasing ablation effectiveness.

It is desirable to provide a force sensor applicable in this scenario, which has low sensitivity differences in all directions and high overall accuracy.

### SUMMARY

In view of the above problems and needs, the present disclosure provides a force sensor that solves the above problems and brings other technical effects by adopting the following technical features.

The present disclosure provides a force sensor comprising a sensor body which includes a first section, a second section, and an intermediate section located between and connecting the first section and the second section. At least a portion of an outer surface of the intermediate section is recessed inward relative to an outer surface of the first section and an outer surface of the second section, so as to form a gap between the first section and the second section. The sensor body further includes an annular portion. The annular portion defines at least a part of an axial boundary of the gap, and wherein a thickness of the annular portion is smaller than a width of an annular surface of the annular portion.

According to an embodiment, the annular portion includes a first annular portion and a second annular portion, wherein the first annular portion defines a part of the axial boundary of the gap and connects a first end of the intermediate section with the first section, and the second annular portion defines a part of the axial boundary of the gap and connects a second end of the intermediate section with the second section.

According to an embodiment, the annular portion extends in a transverse direction perpendicular to the axial direction, or forms an angle of 0 to 15° with respect to the transverse direction.

According to an embodiment, the first section, the second section, and the intermediate section each have a side wall surrounding a hollow portion, wherein the side wall of the intermediate section is parallel to the side wall of the first section and the side wall of the second section.

According to an embodiment, the first section, the second section, and the intermediate section each have a circular annular cross-section, wherein an outer diameter of the intermediate section is smaller than an inner diameter of the first section and smaller than an inner diameter of the second section, and the first section and the second section have the same inner diameter and outer diameter.

According to an embodiment, one of the first section and the second section is directly connected to the intermediate section, and the other of the first section and the second section is connected to the intermediate section through the annular portion.

According to an embodiment, the intermediate section has a first recessed portion, a second recessed portion, and a central portion connecting the first recessed portion and the second recessed portion. The first recessed portion and the second recessed portion are each recessed inward relative to outer surfaces of the first section, the second section, and the central portion, so as to form two gaps; wherein the annular portion includes the first annular portion and the second annular portion. The first annular portion connects a first end of the central portion with the first recessed portion. The second annular portion connects a second end of the central portion with the second recessed portion.

According to an embodiment, the force sensor further includes an optical sensing member extending through the first section and the second section in the axial direction.

According to an embodiment, the optical sensing member includes: a plurality of reflective members extending through the first section in the axial direction; and a plurality of optical fibers extending through the second section in the axial direction, the number of optical fibers corresponding to the number of reflective members, wherein one end of each reflective member extends into the gap and faces an end of each optical fiber extending into the gap.

According to an embodiment, a width-to-thickness ratio of the annular portion is between 2 and 3.

According to an embodiment, the sensor body is an integrally formed structure.

The present disclosure also provides a force-sensing catheter which includes a flexible elongate body having a distal end, and the force sensor according to any of the preceding embodiments. The force sensor is disposed at the distal end within the flexible elongate body.

The present disclosure also provides an ablation device which includes the force sensor according to any of the preceding embodiments or the force-sensing catheter according to any of the preceding embodiments.

The optional embodiments of the present disclosure will be described in more detail below with reference to the accompanying drawings, so that the features and advantages of the present disclosure can be easily understood.

### BRIEF DESCRIPTION OF THE DRAWINGS

To more clearly illustrate the technical solutions of the embodiments of the present disclosure, the drawings of the embodiments of the present disclosure are briefly introduced below. The drawings are only used to show some embodiments of the present disclosure, and are not intended to limit all embodiments of the present disclosure.
Figs. 1A, 1B, 1C, 1D, and 1E show various views of a force sensor according to a first embodiment of the present disclosure;
Figs. 2A, 2B, 2C, 2D, and 2E show various views of a force sensor according to the first embodiment of the present disclosure, with the optical sensing member omitted as compared with Figs. 1A, 1B, 1C, 1D, and 1E;
Figs. 3A, 3B, and 3C show various views of a force sensor according to a second embodiment of the present disclosure;
Figs. 4A, 4B, and 4C show various views of a force sensor according to a third embodiment of the present disclosure;
Figs. 5A, 5B, and 5C show various views of a force sensor according to a fourth embodiment of the present disclosure;
Fig. 6 shows a cross-sectional view with dimensions indicated for the force sensor according to the first embodiment of the present disclosure;
Figs. 7A, 7B, 7C, and 7D show various views of a force sensor according to a fifth embodiment of the present disclosure;
Figs. 8A, 8B, 8C, 8D, and 8E show various views of a force sensor according to a sixth embodiment of the present disclosure;
Figs. 9A, 9B, and 9C show various views of a force sensor according to a seventh embodiment of the present disclosure.

### REFERENCE NUMERALS

100 Sensor body
10 First section
20 Second section
30 Intermediate section
31 First end of the intermediate section
32 Second end of the intermediate section
41 First annular portion
42 Second annular portion
40 Gap
33 First recessed portion
34 Second recessed portion
35 Central portion
351 First end of the central portion
352 Second end of the central portion
36 Accommodating portion
200 Optical sensing member
51 Reflective member
52 Optical fiber
43 Hole

### DETAILED DESCRIPTION OF THE EMBODIMENTS

In order to make the objectives, technical solutions, and advantages of the technical solutions of the present disclosure clearer, the technical solutions of the embodiments of the present disclosure will be clearly and completely described below with reference to the drawings of specific embodiments of the present disclosure. The same reference numerals in the drawings represent the same components. It should be noted that the described embodiments are part of the embodiments of the present disclosure, rather than all of the embodiments. Based on the described embodiments of the present disclosure, all other embodiments obtained by a person of ordinary skill in the art without creative effort shall fall within the protection scope of the present disclosure.

Compared with the embodiments shown in the drawings, feasible implementations within the protection scope of the present disclosure may have fewer components, other components not shown in the drawings, different components, differently arranged components, or differently connected components, etc. In addition, two or more components in the drawings may be implemented in a single component, or a single component shown in the drawings may be implemented as a plurality of separate components.

Unless otherwise defined, the technical terms or scientific terms used herein shall have the ordinary meanings understood by those having ordinary skill in the art to which the present disclosure belongs. The terms "first", "second", and similar words used in the specification and claims of the present disclosure do not indicate any order, quantity, or importance, but are only used to distinguish different components. Similarly, terms such as "a" or "one" do not necessarily indicate a quantitative limitation. The terms "comprising", "including", or similar words mean that the elements or items appearing before the term encompass the elements or items listed after the term and their equivalents, without excluding other elements or items. The terms "connected", "coupled", or similar words are not limited to physical or mechanical connections, but may include electrical connections, whether direct or indirect. Terms such as "upper", "lower", "left", and "right" are only used to indicate relative positional relationships. When the absolute position of the described object changes, the relative positional relationship may also change accordingly.

In various embodiments of the present disclosure, including the embodiments shown in the drawings and not shown in the drawings, the sensor body of the force sensor includes at least two sections that are deformable relative to each other. These two sections may be cylindrical or similar cylindrical structures. The two sections are connected by an annular portion. The annular portion is configured such that deformation between the two movable sections mainly occurs in the annular portion.

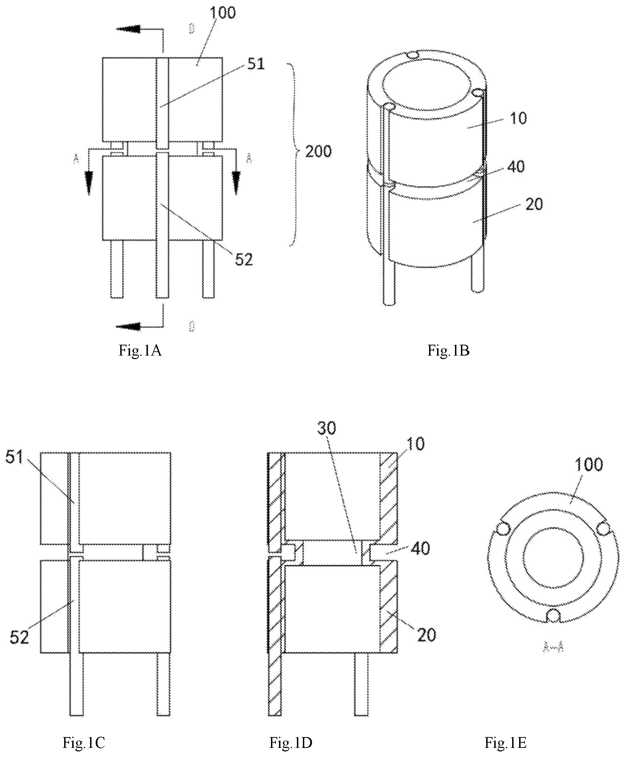

First, a force sensor according to a first embodiment of the present disclosure will be described with reference to Figs. 1A to 2E. It should be noted that, in the present disclosure, features described for any embodiment may also be used in other embodiments, provided that no contradiction arises.

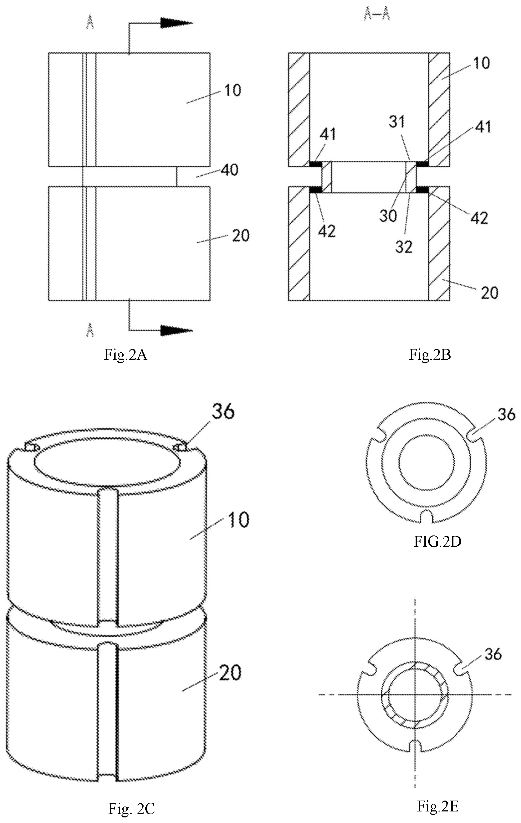

Figs. 1A, 1B, 1C, 1D, and 1E respectively show a side view, a perspective view, a side view from another angle, a cross-sectional view taken along a central plane, and a top view of the force sensor. Compared with Figs. 1A-1E, Figs. 2A-2E show only the sensor body 100, with the optical sensing member 200 omitted. Figs. 2A, 2B, 2C, 2D, and 2E respectively show a side view of the sensor body 100, a cross-sectional view taken along a central plane, a perspective view, a top view, and a cross-sectional view taken through the intermediate section 30.

The force sensor includes the sensor body 100 and the optical sensing member 200 held by the sensor body 100. The sensor body 100 includes the first section 10, the second section 20, and the intermediate section 30 located between and connecting the first section 10 and the second section 20. In the present disclosure, the first section 10 may also be referred to as a distal end of the force sensor, and the second section 20 may also be referred to as a proximal end of the force sensor. Each of the first section 10, the second section 20, and the intermediate section 30 is Optionally a hollow cylindrical structure surrounded by side walls, in particular a cylindrical structure having a circular cross-section.

The outer surface of the intermediate section 30 is recessed inward relative to the outer surface of the first section 10 and the outer surface of the second section 20, so as to form the gap 40 between the first section 10 and the second section 20. When a force is applied at the distal end of the force sensor, i.e., at the position of the first section 10, the first section 10 deforms relative to the second section 20, and accordingly, the axial dimension of the gap 40 also changes.

The sensor body 100 further includes the first annular portion 41 and the second annular portion 42, which define two axial boundaries of the gap 40. The first annular portion 41 connects the first end 31 of the intermediate section 30 with the first section 10. The second annular portion 42 connects the second end 32 of the intermediate section 30 with the second section 20. In the present disclosure, the first annular portion 41 and the second annular portion 42 may be collectively referred to as the annular portion. In the present disclosure, the annular portion is a thin-walled structure, i.e., its thickness is smaller than the width of its annular surface.

Due to the thin-walled shape, when a force is applied at the distal end of the force sensor, deformation between the first section 10 and the second section 20 mainly occurs in the first annular portion 41 and the second annular portion 42. Since the first annular portion 41 and the second annular portion 42 are not located on the cylindrical outer surface of the sensor body 100, but are in very concealed positions that are difficult to touch during operation, direct force on the deformable portions is avoided, thereby improving the measurement accuracy of the force applied to the sensor.

Moreover, since the annular portion is a symmetrical annular structure centered on the central axis of the sensor body 100, the section moments of inertia of the sensor body 100 in all directions are completely equal, thereby minimizing sensitivity differences of the sensor in all directions and improving the overall accuracy of the sensor.

Optionally, the thickness of the annular portion is smaller than the thickness of any of the first section 10 and the second section 20. Further optionally, the thickness of the annular portion is smaller than the thickness of any of the first section 10, the second section 20, and the intermediate section 30.

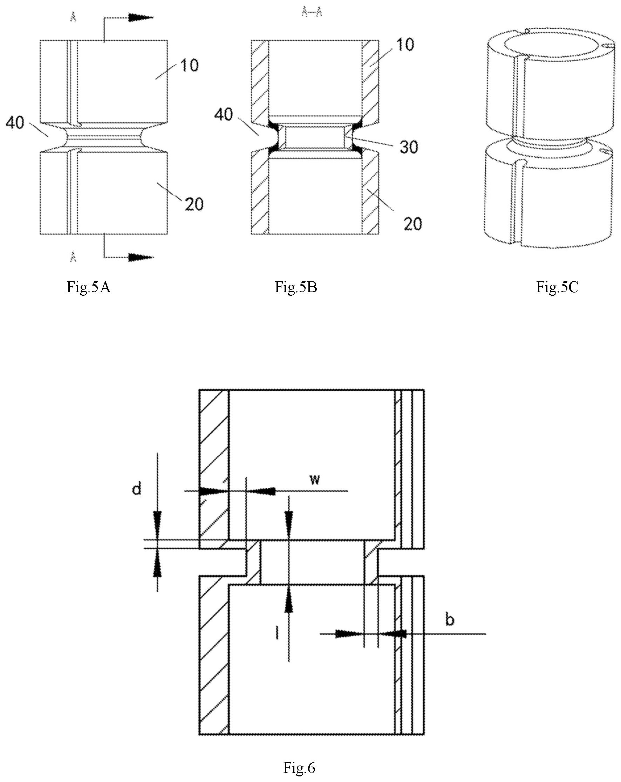

The thin-walled degree of the annular portion can also be expressed by the width-to-thickness ratio of the annular portion. The width of the annular portion, i.e., the width of the annular surface of the annular portion, is equal to the distance between the outer peripheral edge and the inner peripheral edge of the annular portion, and is also equal to the distance between the two components connected by the annular portion. Taking the embodiment of Fig. 6 as an example, the width of the first annular portion 41 is the distance between the first section 10 and the intermediate section 30, and the width of the second annular portion 42 is the distance between the second section 20 and the intermediate section 30. In the first embodiment, the width of the annular portion is also equal to the length of the annular portion extending in the radial direction. The width of the annular portion is indicated by w in Fig. 6.

The thickness of the annular portion is the wall thickness of the annular portion. For an annular portion extending in the transverse direction, its wall thickness can be measured in the axial direction. For an annular portion with non-uniform thickness, the thickness may be an average thickness, or a thickness at an intermediate position thereof. The thickness of the annular portion is indicated by d in Fig. 6.

The width-to-thickness ratio of the annular portion is greater than 1. Optionally, the width-to-thickness ratio of the annular portion is greater than or equal to 2, or greater than or equal to 2.5, or greater than or equal to 3. Optionally, the width-to-thickness ratio of the annular portion is between 2 and 4, and particularly Optionally between 2 and 3.

The force sensor of the present disclosure is extremely small in size. The outer diameter of the sensor body 100 is generally in the range of 1.5 mm to 3 mm. The length of the sensor body 100 is in the range of 1 mm to 8 mm. The thickness of the annular portion is in the range of 0.05 mm to 0.1 mm, for example, 0.06 mm. In this case, if the width-to-thickness ratio is too high, manufacturing difficulty becomes too high and the structural strength of the sensor body 100 decreases. By setting the width-to-thickness ratio w/d of the annular portion between 2 and 3, sufficient deformation can be provided to improve the accuracy of the sensor, while the structural strength of the sensor is ensured and manufacturing difficulty is reduced.

In the first embodiment, both the first annular portion 41 and the second annular portion 42 extend in the transverse direction perpendicular to the axial direction of the sensor body 100. In other embodiments, the first annular portion 41 and/or the second annular portion 42 may form an angle of 0 to 30° with respect to the transverse direction, particularly 0 to 15°, and Further optionally 0 to 10°. By making the annular portion extend substantially parallel to the transverse direction, it helps to ensure that deformation between the first section 10 and the second section 20 mainly occurs in the first annular portion 41 and the second annular portion 42.

The sensor body 100 Optionally satisfies one or more of the following features:
1. the sensor body 100 is an integrally formed structure.
2. the first section 10, the second section 20, and the intermediate section 30 each have a circular annular cross-section, wherein the outer diameter of the intermediate section 30 is smaller than the inner diameter of the first section 10 and smaller than the inner diameter of the second section 20.
3. the side wall of the intermediate section 30 is parallel to the side wall of the first section 10 and the side wall of the second section 20.
4. the first section 10 and the second section 20 have the same inner diameter and outer diameter.

Through these features, particularly the combination of two or more of these features, the sensor body 100 can be manufactured by a simple method using a standard cylindrical blank.

Taking the structure of the sensor body 100 shown in Figs. 2A-2E as an example, the manufacturing method may include: (1) providing a cylindrical blank having a certain wall thickness; (2) widening the inner diameter at a first end of the cylindrical blank to form an inner surface of the first section 10; (3) widening the inner diameter at a second end of the cylindrical blank to form an inner surface of the second section 20; (4) machining a groove from the outer side wall of the cylindrical blank to form the gap 40. The above steps (2), (3), (4) need not be performed in the order described, but may be performed in any order.

The manufacturing method includes, but is not limited to, laser processing, oil-based low-speed wire electrical discharge machining, electrical discharge machining, and the like.

The optical sensing member 200 of the force sensor is held by the sensor body 100 and is configured to sense deformation of the sensor body 100 due to a force and transmit a signal representing the deformation. In some embodiments, the optical sensing member 200 is a combination of the reflective members 51 and the optical fibers 52. In other embodiments, the optical sensing member 200 is a fiber Bragg grating.

The number of the optical sensing members 200 may be plural, and the optical sensing members are accommodated in the accommodating portions 36. In some embodiments, the accommodating portions 36 may be through holes, for example, circular, oval, polygonal, square, rectangular, or irregularly shaped through holes. In other embodiments, the accommodating portions 36 may be grooves open to the outer surface of the sensor body 100, and the cross-sectional shape of the groove may be formed by arcs, curves, combinations of straight lines and curves, etc. As shown in Figs. 2C, 2D, and 2E, each of the first section 10 and the second section 20 has three accommodating portions 36, and for any section, the three accommodating portions 36 are evenly arranged at positions close to the circumference.

The optical sensing member 200 may be a combination of the reflective members 51 and the optical fibers 52. The plurality of reflective members 51 extend through the first section 10 in the axial direction. The plurality of optical fibers 52 extend through the second section 20 in the axial direction, and the number of optical fibers corresponds to the number of reflective members, such that the reflective members 51 and the optical fibers 52 are in a one-to-one correspondence. The embodiment shown in Figs. 1A-1E is such a case. One end of each reflective member 51 extends into the gap 40 and faces an end of the corresponding optical fiber 52 extending into the gap 40. A gap exists between the end of the reflective member 51 and the end of the optical fiber 52. The optical fiber 52 is configured to emit light to the reflective member 51 and collect light reflected from the reflective member 51. Light is emitted from the end surface of the optical fiber 52 and passes through the gap to reach the end surface of the corresponding reflective member 51. Similarly, reflected light from the reflective member 51 passes through the gap to reach the optical fiber 52. When the sensor is subjected to a force, deformation occurs at the annular portion between the first section 10 and the second section 20, causing a change in the distance between the end surface of the optical fiber 52 and the end surface of the reflective member 51. This change in distance can be used to obtain information about the magnitude and direction of the force applied to the sensor, as described below.

The force sensor of the present disclosure can use the following three demodulation schemes.

The first scheme utilizes the white light interferometry demodulation principle. This scheme involves the case where the optical sensing member 200 is the reflective members 51 and the optical fibers 52. When a force is applied at the distal end of the sensor, the annular portion between the second section 20 and the first section 10 deforms, causing a change in the distance between the reflective members 51 and the optical fibers 52. The amount of change in the distance between the reflective members 51 and the optical fibers 52 distributed at three or more positions in the gap 40 is calculated by the white light interferometry demodulation principle, and then the magnitude and direction of the force at the distal end can be calculated.

The second scheme utilizes the light intensity demodulation principle. This scheme involves the case where the optical sensing member 200 is the reflective members 51 and the optical fibers 52. When a force is applied at the distal end of the sensor, the annular portion between the second section 20 and the first section 10 deforms, causing a change in the distance between the reflective members 51 and the optical fibers 52. This change in distance causes a change in the intensity of light received by the optical fiber 52 and reflected from the end surface of the reflective member 51. The magnitude and direction of the force at the distal end can be calculated from the amount of change in light intensity at three or more positions distributed in the gap 40.

The third scheme utilizes the fiber 52 Bragg grating principle. This scheme involves the case where the optical sensing member 200 is fiber Bragg gratings. The fiber Bragg grating is fixed at two ends in the accommodating portions 36 of the second section 20 and the first section 10, respectively. When a force is applied at the distal end of the sensor, the annular portion between the second section 20 and the first section 10 deforms, causing the fiber Bragg grating to be subjected to tension or compression. When the fiber Bragg grating is subjected to tension or compression, its center wavelength changes accordingly. The magnitude and direction of the force at the distal end can be calculated by measuring the amount of change in the center wavelength of the fiber Bragg gratings distributed at three or more positions in the gap 40.

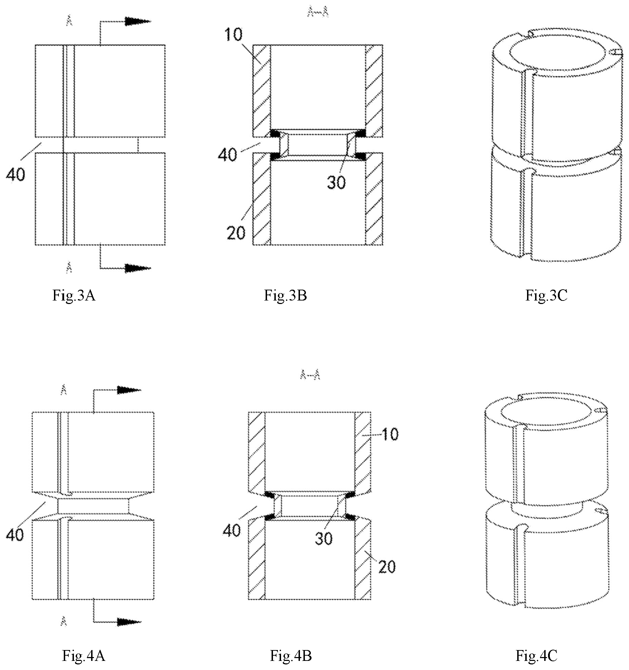

A force sensor according to other embodiments of the present disclosure will be described below with reference to Figs. 3A to 5C. In these embodiments, the arrangements of the first section 10, the second section 20, and the intermediate section 30 are similar to those of the first embodiment, and each has two annular portions. The main difference of these embodiments from the first embodiment lies in the specific shape of the annular portions.

Figs. 3A, 3B, and 3C show various views of a force sensor according to a second embodiment of the present disclosure. In the second embodiment, the annular portions have non-uniform wall thickness. In a cross-sectional view taken along the central plane of the sensor body 100, the first annular portion 41 and the second annular portion 42 have a right trapezoidal shape. The wall thicknesses of the first annular portion 41 and the second annular portion 42 become thinner closer to the central axis of the force sensor, and become thicker farther away from the central axis of the force sensor. The surfaces of the first annular portion 41 and the second annular portion 42 close to the gap 40 extend substantially along the transverse direction of the sensor body 100. The surfaces of the first annular portion 41 and the second annular portion 42 far from the gap 40 form an acute angle with respect to the transverse direction of the sensor body 100. Alternatively, both surfaces of the first annular portion 41 and the second annular portion 42 may form an acute angle with respect to the transverse direction of the sensor body 100, or the surfaces of the first annular portion 41 and the second annular portion 42 close to the gap 40 may form an acute angle with respect to the transverse direction of the sensor body 100, and the surfaces far from the gap 40 may extend substantially along the transverse direction of the sensor body 100. By providing the annular portions with non-uniform wall thickness, it is more advantageous to reduce the processing difficulty of the force sensor.

Figs. 4A, 4B, and 4C show various views of a force sensor according to a third embodiment of the present disclosure. In the third embodiment, in a cross-sectional view taken along the central plane of the sensor body 100, the first annular portion 41 and the second annular portion 42 have a parallelogram shape. The first annular portion 41 and the second annular portion 42 form an acute angle with respect to the transverse direction of the sensor body 100. The acute angle is Optionally less than 30°, and Further optionally less than 15°. By allowing the annular portions to have an inclination angle within a controlled range, it is possible to ensure that deformation of the first section 10 relative to the second section 20 mainly occurs in the annular portions, while allowing the processing accuracy requirement of the sensor body 100 to be reduced.

Figs. 5A, 5B, and 5C show various views of a force sensor according to a fourth embodiment of the present disclosure. In the fourth embodiment, in a cross-sectional view taken along the central plane of the sensor body 100, the first annular portion 41 and the second annular portion 42 have irregular shapes. The first annular portion 41 and the second annular portion 42 are not flat thin walls, but have annular surfaces formed by curved surfaces. In this embodiment, the dimension of the gap 40 increases in a direction away from the central axis, and the two axial sides of the gap 40 are defined by curved lines. This solution also ensures that deformation of the first section 10 relative to the second section 20 mainly occurs in the annular portions, while allowing the processing accuracy requirement of the sensor body 100 to be reduced.

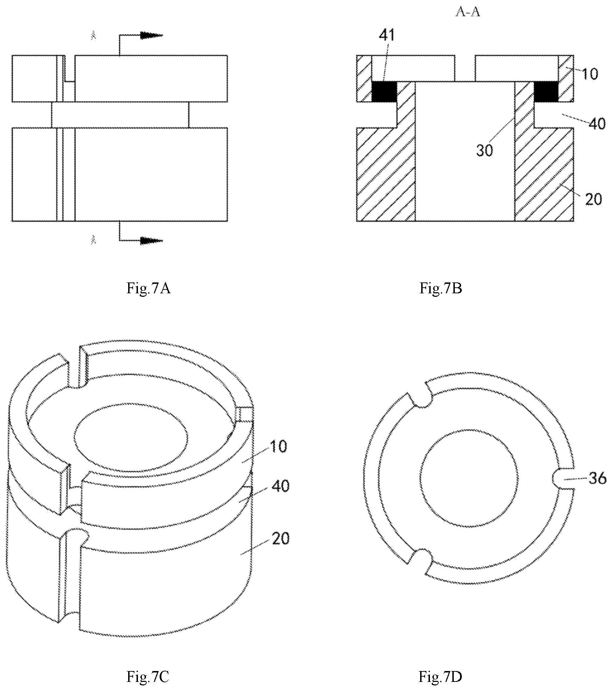

Figs. 7A to 7D show a force sensor according to a fifth embodiment of the present disclosure. This embodiment has only one annular portion, i.e., the first annular portion 41. The second section 20 is directly connected to the intermediate section 30. The first section 10 is connected to the intermediate section 30 through the annular portion. It can be understood that, in an embodiment not shown, the first section 10 may be directly connected to the intermediate section 30, and the second section 20 may be connected to the intermediate section 30 through the annular portion. In addition, in an embodiment not shown, the second section may be configured to have an outer diameter smaller than the outer diameter of the first section, or even equal to the outer diameter of the intermediate section 30.

As shown in this embodiment, the section directly connected to the intermediate section 30, here the second section 20, is configured such that its inner peripheral surface is continuous with the inner peripheral surface of the intermediate section 30. This simplifies the manufacturing steps, because the step of widening the inside of the second section 20 can be omitted.

The wall thickness of the first section 10 is configured such that its inner peripheral surface is farther from the central axis than the outer peripheral surface of the intermediate section 30, so as to leave space for the annular portion.

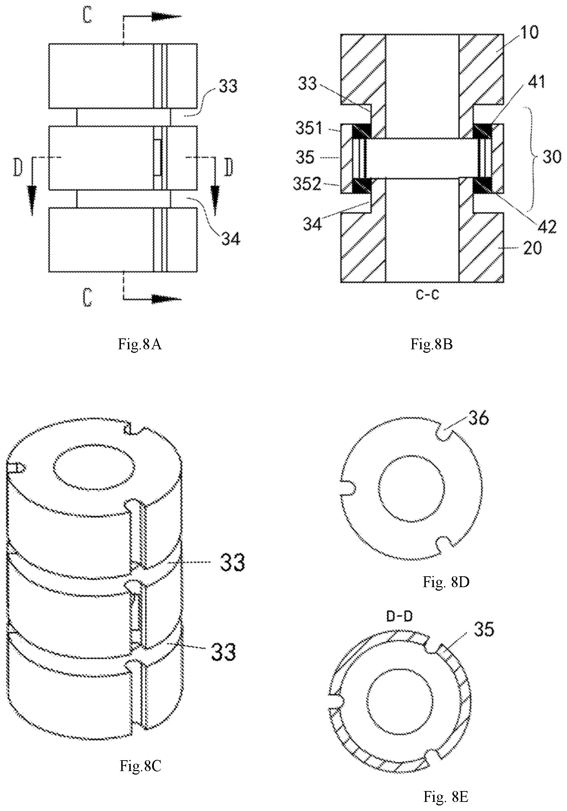

Figs. 8A to 8E show a force sensor according to a sixth embodiment of the present disclosure. Different from the foregoing embodiments, this embodiment has two gaps 40.

Specifically, the sensor body 100 of the sixth embodiment can be divided into three sections: the first section 10, the second section 20, and the intermediate section 30 connecting the first section 10 and the second section 20. The intermediate section 30 has the first recessed portion 33, the second recessed portion 34, and the central portion 35 connecting the first recessed portion 33 and the second recessed portion 34. The first recessed portion 33 and the second recessed portion 34 are each recessed inward relative to the outer surfaces of the first section 10, the second section 20, and the central portion 35, so as to form the two gaps 40.

The annular portion of this embodiment includes the first annular portion 41 and the second annular portion 42. The first annular portion 41 connects the first end 351 of the central portion 35 with the first recessed portion 33. The second annular portion 42 connects the second end 352 of the central portion 35 with the second recessed portion 34.

By forming two gaps 40 and providing annular portions adjacent to both gaps, deformation of the entire sensor body 100 is facilitated, and the overall measurement accuracy is improved.

In the sixth embodiment, it is optional that the first section 10, the first recessed portion 33, the second section 20, and the second recessed portion 34 have the same inner diameter, so as to simplify the processing steps.

When manufacturing the sensor of the sixth embodiment, only the following steps are required: (1) providing a cylindrical blank; (2) machining the first recessed portion 33; (3) machining the second recessed portion 34; (4) widening the middle portion of the intermediate section 30. Steps (2) to (4) need not be performed in the order described, but may be performed in any order.

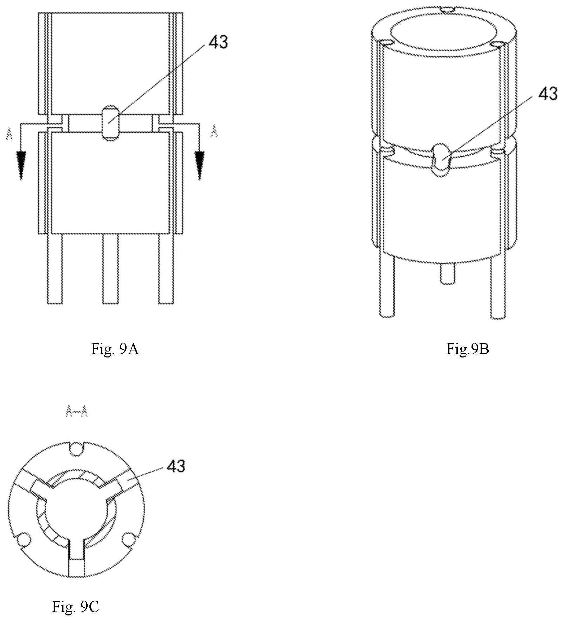

Figs. 9A to 9C show a force sensor according to a seventh embodiment of the present disclosure. This embodiment is similar to the first embodiment, with the main difference that the annular portion in this embodiment is non-continuous and is divided into two or more sector segments. In the case of two sector segments, it is optional that the two sector segments are identical. In the case of more than two sector segments, it is optional that they are evenly distributed along the circumference, so as to reduce sensitivity differences of the sensor in all directions. These sector segments may be separated by holes 43, as shown in Fig. 9C.

The force sensor according to any embodiment of the present disclosure can be disposed in a force-sensing catheter. The force-sensing catheter has a flexible elongate body with a distal end. The force sensor is disposed at the distal end within the flexible elongate body. The force sensor compresses or bends in response to a contact force applied to the distal end of the flexible elongate body, for example, a contact force generated when the distal end contacts a wall of a blood vessel or organ. The force-sensing catheter may have a width and length suitable for insertion into a human blood vessel or organ. The force-sensing catheter may include a proximal portion, an intermediate portion, and a distal portion. The distal portion may include an end effector accommodating the force sensor.

End effectors known in the art for diagnosis or treatment of blood vessels or organs, such as mapping electrodes or ablation electrodes, may be used in combination with any embodiment of the present disclosure. For example, the force sensor of the present disclosure may be used in a mapping electrode or an ablation electrode. In addition, the force-sensing catheter may be configured as an electrophysiology catheter to perform cardiac mapping and ablation. In other embodiments, the force-sensing catheter may be configured to deliver a drug or bioactive agent to a blood vessel or organ wall, or to perform a minimally invasive surgery such as transmyocardial revascularization or cryoablation.

The specific structure of the force-sensing catheter to which the force sensor of the present disclosure is applied is not limited. Depending on the application, the force-sensing catheter may be a hollow structure (i.e., having a lumen) or a non-hollow structure (i.e., having no lumen).

The force sensor according to any embodiment of the present disclosure can be disposed in an ablation device. In addition, the force-sensing catheter according to any embodiment of the present disclosure can be disposed in an ablation device, or the force-sensing catheter itself can serve as an ablation device. The ablation device can be used to treat diseases such as atrial fibrillation, supraventricular tachycardia, ventricular tachycardia, and cardiac tumors.

The ablation device may have a catheter for delivering energy (e.g., radiofrequency energy, cryogenic energy, etc.) to a specific site of the heart. The force sensor may be mounted, for example, at the tip of the catheter, for real-time monitoring of the contact force between the catheter and cardiac tissue. Such monitoring helps to ensure adequate contact between the catheter and the target tissue, thereby improving ablation effectiveness.

The present disclosure also relates to a medical apparatus. The medical apparatus may have the force sensor according to any embodiment of the present disclosure, or the force-sensing catheter according to any embodiment of the present disclosure.

The exemplary embodiments of the proposed solutions of the present disclosure have been described in detail above with reference to the optional embodiments. However, those skilled in the art will understand that various modifications and variations may be made to the above specific embodiments without departing from the concept of the present disclosure, and various technical features and structures proposed in the present disclosure may be combined in various ways without departing from the protection scope of the present disclosure. The protection scope of the present disclosure is determined by the appended claims.

## Claims

1. A force sensor, wherein,
the force sensor comprises a sensor body (100), the sensor body (100) comprising a first section (10), a second section (20), and an intermediate section (30) located between the first section (10) and the second section (20) and connecting the first section (10) and the second section (20);
at least a portion of an outer surface of the intermediate section (30) is recessed inward relative to an outer surface of the first section (10) and an outer surface of the second section (20), so as to form a gap (40) between the first section (10) and the second section (20);
the sensor body (100) further comprises an annular portion, the annular portion defining at least a part of an axial boundary of the gap (40), wherein a thickness of the annular portion is smaller than a width of an annular surface of the annular portion.

2. The force sensor according to claim 1, wherein,
the annular portion comprises a first annular portion (41) and a second annular portion (42), the first annular portion (41) defining a part of the axial boundary of the gap (40) and connecting a first end (31) of the intermediate section (30) with the first section (10), the second annular portion (42) defining a part of the axial boundary of the gap (40) and connecting a second end (32) of the intermediate section (30) with the second section (20).

3. The force sensor according to claim 1, wherein,
the annular portion extends in a transverse direction perpendicular to an axial direction, or forms an angle of 0 to 15° with respect to the transverse direction.

4. The force sensor according to claim 1, wherein,
the first section (10), the second section (20), and the intermediate section (30) each have a side wall surrounding a hollow portion,
wherein the side wall of the intermediate section (30) is parallel to the side wall of the first section (10) and the side wall of the second section (20).

5. The force sensor according to claim 1, wherein,
the first section (10), the second section (20), and the intermediate section (30) each have a circular annular cross-section, wherein an outer diameter of the intermediate section (30) is smaller than an inner diameter of the first section (10) and smaller than an inner diameter of the second section (20); and
the first section (10) and the second section (20) have the same inner diameter and outer diameter.

6. The force sensor according to claim 1, wherein,
one of the first section (10) and the second section (20) is directly connected to the intermediate section (30),
the other of the first section (10) and the second section (20) is connected to the intermediate section (30) through the annular portion.

7. The force sensor according to claim 1, wherein,
the intermediate section (30) has a first recessed portion (33), a second recessed portion (34), and a central portion (35) connecting the first recessed portion (33) and the second recessed portion (34), the first recessed portion (33) and the second recessed portion (34) each being recessed inward relative to outer surfaces of the first section (10), the second section (20), and the central portion (35), so as to form two gaps (40);
wherein the annular portion comprises a first annular portion (41) and a second annular portion (42), the first annular portion (41) connecting a first end (351) of the central portion (35) with the first recessed portion (33), the second annular portion (42) connecting a second end (352) of the central portion (35) with the second recessed portion (34).

8. The force sensor according to claim 1, wherein,
the force sensor further comprises an optical sensing member (200) extending through the first section (10) and the second section (20) in the axial direction.

9. The force sensor according to claim 8, wherein,
the optical sensing member (200) comprises:
a plurality of reflective members (51) extending through the first section (10) in the axial direction; and
a plurality of optical fibers (52) extending through the second section (20) in the axial direction, the number of optical fibers corresponding to the number of reflective members;
wherein one end of each reflective member (51) extends into the gap (40) and faces an end of the corresponding optical fiber (52) extending into the gap (40).

10. The force sensor according to claim 1, wherein,
a width-to-thickness ratio (w/d) of the annular portion is between 2 and 3.

11. The force sensor according to claim 1, wherein,
the sensor body (100) is an integrally formed structure.

12. A force-sensing catheter, comprising:
a flexible elongate body having a distal end; and
the force sensor according to any one of claims 1-11, the force sensor being disposed at the distal end within the flexible elongate body.

13. An ablation device, comprising the force sensor according to any one of claims 1-11 or the force-sensing catheter according to claim 12.

14. A medical apparatus, comprising the force sensor according to any one of claims 1-11 or the force-sensing catheter according to claim 12.
